(19)

Europäisches
Patentamt
European
Patent Office
Office européen
des brevets

(11) **EP 3 800 221 A1**

(12) **EUROPEAN PATENT APPLICATION**

(43) Date of publication:
**07.04.2021 Bulletin 2021/14**

(51) Int Cl.:
***C08L 23/04*** (2006.01)

(21) Application number: **19201458.7**

(22) Date of filing: **04.10.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Borealis AG
1220 Vienna (AT)**

(72) Inventors:
- **Liu, Yi**
  **4021 Linz (AT)**
- **Kahlen, Susanne**
  **4021 Linz (AT)**
- **Braun, Hermann**
  **4021 Linz (AT)**

(74) Representative: **Maiwald Patent- und
Rechtsanwaltsgesellschaft mbH
Elisenhof
Elisenstraße 3
80335 München (DE)**

(54) **MIXED-PLASTIC POLYETHYLENE BLEND**

(57)    A process for providing a mixed-plastic-polyethylene product blend having a melt flow rate of 0.1 to 0.45 g/10 min (ISO 1133, 2.16 kg load, 190°C), more preferably of from 0.2 to 0.45 g/10 min, from a mixed-plastic-polyethylene primary blend originating from 90 to 100 wt.-% from a waste stream, the process comprising:
a) providing a mixed-plastic-polyethylene primary blend originating from 90 to 100 wt.-% from a waste stream having a melt flow rate (ISO 1133, 2.16 kg load, 190°C) of 0.50 to 1.4 g/10min and having a content of units derived from ethylene of 80 to 95 wt.-% as determined by quantitative $^{13}C\{^1H\}$-NMR,

b) providing a virgin high-density polyethylene (HDPE) having a melt flow rate (ISO 1133, 5.0 kg load, 190°C) within a range of from 0.001 up to 0.50 g/10 min, preferably within a range of from 0.001 up to 0.30 g/10 min, and having a density of from 945 to 958 kg/m$^3$
c) melt compounding the mixed-plastic-polyethylene primary blend with 2.0 to 20 wt.-% of the virgin high-density polyethylene (HDPE) in an extruder with a screw speed of from 100 to 400 rpm and at a barrel temperature set in the range from 150°C to 250°C, thereby
yielding the mixed-plastic-polyethylene product blend

**EP 3 800 221 A1**

**Description**

**Field of the Invention**

The present invention relates to upgrading of PE recycling streams using virgin high-density polyethylenes (HDPE).

**Background**

There are a number of methods for modifying the rheological properties of recycled material in the art. Many such processes involve the use of free radical generators, in particular peroxides, as rheology modifiers, for example EP 1 036 771 A1, WO 2017/00138441 A1, and WO 2017/202802 A1. WO 2013/025822 A1 details a method by which polypropylene and polyethylene are separated from the waste stream, before being recombined and treated with peroxide. EP 2 568 000 A1 details a viscosity controlled composition resulting from incorporating small amounts of recycled material into a matrix of virgin polymer. EP 2 770 016 A1 describes a generic method for adjusting physical properties of a recycled composition through the addition of a chemical compound and melt blending.

A particular problem in recycled polyethylene materials is that unacceptable variations as to impact strength are conventionally observed in recycled polyethylene blends.

The problem remains that recycled polyethylene blends containing substantial amounts of poly-alpha-olefin(co)polymers, polyamide and other contaminates frequently have low impact strength. A further problem originates from the fact that recycled polyethylene blends containing substantial amounts of alpha-olefins, polyamide and other contaminates is required to have a melt flow rate at a load of 2.16 kg in the range of 0.10 to 0.45 g/10min for a number of final applications.

**Summary of the Invention**

The present invention provides a process addressing one or more of these objects and a mixed-plastic polyethylene product blend. The present invention is also concerned with the use of a specific virgin high-density polyethylene at low screw speeds of an extruder for improving impact properties.

The present invention is based on the finding that specific measures including choice of virgin high-density polyethylene having a melt flow rate (ISO 1133, 5.0 kg load, 190°C) within a range of from 0.001 up to 0.50 g/10 min, preferably within a range of from 0.001 up to 0.30 g/10 min, together with specific screw speed and optionally and preferentially isotherm temperature profile of the barrel allow the user to overcome the limitations.

The present invention particularly provides

a process for providing a mixed-plastic-polyethylene product blend having a melt flow rate of 0.1 to 0.45 g/10 min (ISO 1133, 2.16 kg load, 190°C), more preferably of from 0.2 to 0.45 g/10 min, from a mixed-plastic-polyethylene primary blend originating from 90 to 100 wt.-% from a waste stream, the process comprising:

   a) providing a mixed-plastic-polyethylene primary blend originating from 90 to 100 wt.-% from a waste stream having a melt flow rate (ISO 1133, 2.16 kg load, 190°C) of 0.50 to 1.4 g/10min and having a content of units derived from ethylene of 80 to 95 wt.-% as determined by quantitative $^{13}C\{^{1}H\}$-NMR,
   b) providing a virgin high-density polyethylene (HDPE) having a melt flow rate (ISO 1133, 5.0 kg load, 190°C) within a range of from 0.001 up to 0.50 g/10 min, preferably within a range of from 0.001 up to 0.30 g/10 min, and having a density of from 945 to 958 kg/m$^3$
   c) melt compounding the mixed-plastic-polyethylene primary blend with 2.0 to 20 wt.-% of the virgin high-density polyethylene (HDPE) in an extruder with a screw speed of from 100 to 400 rpm and at a maximum barrel temperature set in the range from 150°C to 250°C, thereby yielding the mixed-plastic-polyethylene product blend.

The present invention further provides a

A mixed-plastic polyethylene product blend obtainable by the process as described herein, i.e. by

   a) providing a mixed-plastic-polyethylene primary blend originating from 90 to 100 wt.-% from a waste stream having a melt flow rate (ISO 1133, 2.16 kg load, 190°C) of 0.50 to 1.4 g/10min and having a content of units derived from ethylene of 80 to 95 wt.-% as determined by quantitative $^{13}C\{^{1}H\}$-NMR,
   b) providing a virgin high-density polyethylene (HDPE) having a melt flow rate (ISO 1133, 5.0 kg load, 190°C) within a range of from 0.001 up to 0.50 g/10 min, preferably within a range of from 0.001 up to 0.30 g/10 min, and having a density of from 945 to 958 kg/m$^3$
   c) melt compounding the mixed-plastic-polyethylene primary blend with 2.0 to 20 wt.-% of the virgin high-density polyethylene (HDPE) in an extruder with a screw speed of from 100 to 400 rpm and at a maximum barrel temperature set in the range from 150°C to 250°C, thereby
yielding the mixed-plastic-polyethylene product blend having a melt flow rate of 0.1 to 0.45 g/10 min (ISO 1133, 2.16 kg load, 190°C), and further having an impact strength (ISO 179-1, 23°C) of at least 19.0 kJ/m$^2$ and a tensile modulus of at least 750 MPa (ISO 527-1,2) when measured on an injection molded test specimen.

In a further aspect the present invention is concerned with the use of

- a virgin high-density polyethylene (HDPE) having a melt flow rate (ISO 1133, 5.0 kg load, 190°C) within a range of from 0.001 up to 0.50 g/10 min, preferably within a range of from 0.001 up to 0.30 g/10 min, and a density of from 945 to 958 kg/m$^3$;

for providing impact strength (ISO 179-1, 23°C) of at least 19 kJ/m$^2$ of a mixed-plastic-polyethylene primary blend originating from 90 to 100 wt.-% from a waste stream and having

- a melt flow rate (ISO 1133, 2.16 kg load, 190°C) of 0.50 to 1.4 g/10min; and
- a content of units derived from ethylene of 80 to 95 wt.-% as determined by quantitative $^{13}C\{^1H\}$-NMR.

by
melt compounding in the presence of said virgin high-density polyethylene (HDPE) in an extruder with a screw speed of from 100 to 400 rpm and at a barrel temperature set in the range from 150°C to 250 °C.

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

For the purposes of the present description and of the subsequent claims, the term "mixed-plastic-polyethylene" indicates a polymer material including predominantly units derived from ethylene apart from other polymeric ingredients of arbitrary nature. Such polymeric ingredients may for example originate from monomer units derived from alpha olefins such as propylene, butylene, octene, and the like, styrene derivatives such as vinylstyrene, substituted and unsubstituted acrylates, substituted and unsubstituted methacrylates.

A mixed-plastic-polyethylene primary blend denotes the starting primary blend containing the mixed plastic-polyethylene as described above. Conventionally further components such as fillers, including organic and inorganic fillers for example talc, chalk, carbon black, and further pigments such as TiO$_2$ as well as paper and cellulose may be present. In a specific and preferred embodiment the waste stream is a post-consumer waste stream. Such material is characterized by a limonene content of from 1 to 500 mg/kg (as determined using solid phase microextraction (HS-SPME-GC-MS) by standard addition).

Waste stream refers to objects having completed at least a first use cycle (or life cycle), i.e. having already served their first purpose. Waste streams also include manufacturing scrap, which does not normally reach a consumer.

The term "virgin" denotes the newly produced materials and/or objects prior to their first use, which have not already been recycled.

If not indicated otherwise "%" refers to weight-%.

Isothermal profile means that the temperature remains constant.

In the process according to the present invention for providing a mixed-plastic-polyethylene product blend having a melt flow rate of 0.1 to 0.45 g/10 min (ISO 1133, 2.16 kg load, 190°C), a mixed plastic-polyethylene primary blend is used as the starting material.

Such mixed-plastic-polyethylene primary blend shall originate for more than 90 wt.-% from a waste stream. Preferably the mixed-plastic-polyethylene primary blend shall originate for more than 95 wt.-% from a waste stream, more preferably for more than 98 wt.-% from waste material. Most preferably the mixed-plastic-polyethylene primary blends originate for more than 99 wt.-% from a waste stream.

The origin of the waste stream is not fixed. Usually the waste stream will originate from conventional collecting systems such as implemented in the European Union. The waste stream can be a stream from post-consumer waste or industrial waste or both. Detection of post-consumer waste is easily possible by detection of limonene content.

The mixed-plastic-polyethylene primary blend originating from 90 to 100 wt.-% from a waste stream has a melt flow rate (ISO 1133, 2.16 kg load, 190°C) of 0.50 to 1.4 g/10min and a content of units derived from ethylene of 80 to 95 wt.-% as determined by quantitative $^{13}C\{^1H\}$-NMR. Preferably, the mixed-plastic-polyethylene primary blend has a melt flow rate (ISO 1133, 2.16 kg load, 190°C) of 0.55 to 1.2 g/10min and most preferably 0.60 to 1.0 g/10min.

Mixed-plastic-polyethylene primary blends as used herein are commercially available.

The mixed-plastic-polyethylene primary blend according to the present invention preferably includes

a) 80 to 95 wt.-% of units derived from ethylene as determined by quantitative $^{13}C\{^1H\}$-NMR and further
b) 0 to 10 wt.-% units derived from alpha olefin(s)
c) 0 to 3.0 wt.-% stabilizers
d) 0 to 3.0 wt.-% talc
e) 0 to 3.0 wt.-% chalk
f) 0 to 6.0 wt.-% further components

all percentages with respect to the mixed-plastic-polyethylene primary blend,
whereby the total of components a), b), c), d), e) and f), add up to 100 wt.-%.

More preferably the mixed-plastic-polyethylene primary blend according to the present invention includes

a) 80 to 95 wt.-% of units derived from ethylene as determined by quantitative $^{13}C\{^1H\}$-NMR and further
b) 0 to 10 wt.-% units derived from alpha olefin(s)
c) 0 to 3.0 wt.-% stabilizers
d) 0 to 2.0 wt.-% talc
e) 0 to 2.0 wt.-% chalk
f) 0 to 5.0 wt.-% further components

all percentages with respect to the mixed-plastic-polyethylene primary blend,
whereby the total of components a), b), c), d), e) and f), add up to 100 wt.-%.

In the process according the present invention there is provided a virgin high-density polyethylene (HDPE) having a melt flow rate (ISO 1133, 5.0 kg load, 190°C) within a range of from 0.001 up to 0.50 g/10 min, preferably within a range of from 0.001 up to 0.30 g/10 min. Such virgin high-density polyethylenes are commercially available. Alternatively, virgin high-density polyethylenes as described can be polymerized by means known in the art.

In an aspect of the present invention, 2.0 to 20 wt.-%, more preferably 4.0 to 18.0 wt.-%, of the virgin high-density polyethylene (HDPE) in an extruder with a screw speed of from 100 to 400 rpm and at a barrel temperature set in the range from 150 °C to 250°C are used in the melt compounding step. The screw speed of this step preferably is from 100 to 250 rpm and most preferably from 100 to 125 rpm. The barrel temperature is more preferably set in the range from 200°C to 250°C.

The process yields a mixed-plastic-polyethylene product blend having a melt flow rate of 0.1 to 0.45 g/10 min (ISO 1133, 2.16 kg load, 190°C), more preferably of from 0.2 to 0.45 g/10 min. This blend has a good level of impact strength essentially irrespective of the impact strength of the mixed-plastic-polyethylene primary blend.

It is preferred that the ratio of melt flow rate of mixed-plastic-polyethylene primary blend (ISO 1133, 2.16 kg load, 190°C) versus melt flow rate of mixed-plastic-polyethylene product blend (ISO 1133, 2.16 kg load, 190°C) is in the range of 1.1 to 3,0 more preferably in the range of 1.2 to 2.7.

In a further aspect of the invention, the ratio of melt flow rate of mixed-plastic-polyethylene primary blend (ISO 1133, 5.0 kg load, 190°C) versus melt flow rate of mixed-plastic-polyethylene product blend (ISO 1133, 5.0 kg load, 190°C) is in the range of 1.1 to 3.0, more preferably in the range of 1.3 to 2.5, and/or the ratio of melt flow rate of mixed-plastic-polyethylene primary blend (ISO 1133, 21.6 kg load, 190°C) versus melt flow rate of mixed-plastic-polyethylene product blend (ISO 1133, 21.6 kg load, 190°C) is in the range of 1.05 to 2.0, more preferably in the range of 1.05 to 1.6.

In another aspect of the present invention, the density of the mixed-plastic-polyethylene primary blend is in the range of 950 to 985 kg/m$^3$, more preferably in the range of 955 to 985 kg/m$^3$.

In yet a further aspect, the melt flow rate the mixed-plastic-polyethylene primary blend (ISO 1133, 5.0 kg load, 190°C) is in the range of 2.0 to 5.0 g/10min, more preferably in the range of 2.2 to 4.5 g/10 min.

The process according to the present invention results in a change of the mechanical properties. Preferably, the ratio of Charpy Notched Impact Strength of the mixed-plastic-polyethylene product blend measured according to ISO 179-1 eA at + 23 °C on injection moulded specimens of 80 x 10 x 4 mm prepared according to EN ISO 1873-2 versus the Charpy Notched Impact Strength of the mixed-plastic-polyethylene primary blend measured according to ISO 179-1 eA at + 23 °C on injection moulded specimens of 80 x 10 x 4 mm prepared according to EN ISO 1873-2 is from 1.05 to 1.80, more preferably 1.20 to 1.75, most preferably from 1.30 to 1.70.

Preferably the ratio of tensile modulus of the mixed-plastic-polyethylene product blend measured according to ISO 527-2 at + 23 °C on injection moulded specimens of 80 x 10 x 4 mm prepared according to EN ISO 1873-2 versus the tensile modulus of the mixed-plastic-polyethylene primary blend measured according ISO 527-2 at + 23 °C on injection moulded specimens of 80 x 10 x 4 mm prepared according to EN ISO 1873-2 is from 0.95 to 1.20.

It is preferred that the virgin high-density polyethylene (HDPE) comprises a $C_3$-$C_8$ $\alpha$-olefin comonomer in an amount of 0.1 to 1.0 mol.-%, more preferably 0.15 to 0.7 mol.-%.

It is further preferred that the comonomer of the $C_3$-$C_8$ $\alpha$-olefin comonomer is either butene or hexene, most preferably hexene.

The virgin high-density polyethylene (HDPE) preferably has the following property:

a) a melt flow rate (ISO 1133, 21.6 kg load, 190°C) in the range of 0.5 to 7.0 g/10 min,

In a preferred embodiment the virgin high-density polyethylene (HDPE) has one or more, preferably all, of the following properties:

a) melt flow rate (ISO 1133, 5.0 kg load, 190°C) in the range of 0.001 to 0.15 g/10 min, more preferably in the range of 0.001 to 0.1 g/10 min,
b) melt flow rate (ISO 1133, 21.6 kg load, 190°C) in the range of 0.5 to 2.5, more preferably in the range of 0.6 to 2.0 g/10 min,
c) between 0.10 and 0.40 mol.-%, more preferably between 0.15 and 0.35 mol.-% of a $C_3$-$C_8$ $\alpha$-olefin comonomer, and

is present in an amount of from 2.0 to 13.0 wt.-%, more preferably from 3.0 to 11.0 wt.-%.

In an equally preferred embodiment the virgin high-density polyethylene has one or more, preferably all, of the following properties:

a) melt flow rate (ISO 1133, 5.0 kg load, 190°C) in the range of 0.15 to 0.40 g/10 min, more preferably in the range of 0.20 to 0.30 g/10 min,
b) melt flow rate (ISO 1133, 21.6 kg load, 190°C) in the range of 5.0 to 7.0 g/10 min, more preferably in the range of 6.0 to 7.0 g/10 min,
c) between 0.40 and 0.80 mol.-%, more preferably between 0.40 and 0.60 mol.-% of a $C_3$-$C_8$ $\alpha$-olefin comonomer, and

is present in an amount of from 15.0 to 20.0 wt.-%, more preferably from 16.0 to 18.0 wt.-%.

In a further aspect, the barrel temperature profile is an isothermal profile.

The process according to the present invention enables the provision of a mixed-plastic polyethylene product blend having

(i) a tensile modulus of from 750 to 1100 MPa (ISO 527-1,2) when measured on an injection molded test specimen; and
(ii) an impact strength of from 19.0 to 30 kJ/m$^2$ (ISO 179-1, 23°C), and/or
(iii) a melt flow rate (ISO 1133, 5.0 kg load, 190°C) of 0.5 to 2.5 g/10min, and/or
(iv) melt flow rate (ISO 1133, 21.6 kg load, 190°C) of 10 to 65 g/10min

## Detailed Description

In the following, some particularly preferred embodiments shall be described.

A first and particularly preferred embodiment concerns a process for providing a mixed-plastic-polyethylene product blend having a melt flow rate of 0.1 to 0.45 g/10 min (ISO 1133, 2.16 kg load, 190°C), more preferably of from 0.2 to 0.45 g /10 min, from a mixed-plastic-polyethylene primary blend originating from 90 to 100 wt.-% from a waste stream, whereby the mixed-plastic-polyethylene primary blend includes

a) 80 to 95 wt.-% of units derived from ethylene as determined by quantitative $^{13}C\{^1H\}$-NMR and further
b) 0 to 10 wt.-% units derived from alpha olefin(s)
c) 0 to 3.0 wt.-% stabilizers
d) 0 to 3.0 wt.-% talc
e) 0 to 3.0 wt.-% chalk
f) 0 to 6.0 wt.-% further components

all percentages with respect to the mixed-plastic-polyethylene primary blend, whereby the total of components a), b), c), d), e) and f), add up to 100 wt.-%, the process comprising:

a) providing a mixed-plastic-polyethylene primary blend originating from 90 to 100 wt.-% from a waste stream having a melt flow rate (ISO 1133, 2.16 kg load, 190°C) of 0.50 to 1.4 g/10min and having a content of units derived from ethylene of 80 to 95 wt.-% as determined by quantitative $^{13}C\{^1H\}$-NMR,
b) providing a virgin high-density polyethylene (HDPE) having a melt flow rate (ISO 1133, 5.0 kg load, 190°C) within a range of from 0.001 up to 0.50 g/10 min, preferably within a range of from 0.001 up to 0.30 g/10 min, and having a density of from 945 to 958 kg/m$^3$,
c) melt compounding the mixed-plastic-polyethylene primary blend with 2.0 to 20 wt.-% of the virgin high-density polyethylene (HDPE) in an extruder with a screw speed of from 100 to 400 rpm and at a barrel temperature set in the range from 150°C to 250°C, thereby

yielding the mixed-plastic-polyethylene product blend.

A second and particularly preferred embodiment concerns a
process for providing a mixed-plastic-polyethylene product blend having a melt flow rate of 0.1 to 0.45 g/10 min (ISO 1133, 2.16 kg load, 190°C), more preferably of from 0.2 to 0.45 g/10 min from a mixed-plastic-polyethylene primary blend originating for more than 90 wt.-% from a waste stream,
whereby the mixed-plastic-polyethylene primary blend includes

a) 80 to 95 wt.-% of units derived from ethylene as determined by quantitative $^{13}C\{^1H\}$-NMR and further
b) 0 to 10 wt.-% units derived from alpha olefin(s)
c) 0 to 3.0 wt.-% stabilizers
d) 0 to 3.0 wt.-% talc
e) 0 to 3.0 wt.-% chalk
f) 0 to 6.0 wt.-% further components

all percentages with respect to the mixed-plastic-polyethylene primary blend,
whereby the total of components a), b), c), d), e) and f), add up to 100 wt.-%, and
wherein the mixed-plastic-polyethylene primary blend has a shear thinning index $SHi_{2.7/210}$ of 25 to 45 measured by dynamic shear measurement according to ISO 6721-1 and ISO 6721-10,
the process comprising:

a) providing a mixed-plastic-polyethylene primary blend originating from 90 to 100 wt.-% from a waste stream having a melt flow rate (ISO 1133, 2.16 kg load, 190°C) of 0.50 to 1.4 g/10min and having a content of units derived from ethylene of 80 to 95 wt.-% as determined by quantitative $^{13}C\{^1H\}$-NMR,
b) providing a virgin high-density polyethylene (HDPE) having a melt flow rate (ISO 1133, 5.0 kg load, 190°C) within a range of from 0.001 up to 0.50 g/10 min, preferably within a range of from 0.001 up to 0.30 g/10 min, having a density of from 945 to 958 kg/m$^3$ and containing from 0.1 to 1.0 mol.-% of a $C_3$-$C_8$ $\alpha$-olefin comonomer,
c) melt compounding the mixed-plastic-polyethylene primary blend with 4.0 to 18 wt.-% of the virgin high-density polyethylene (HDPE) in an extruder with a screw speed of from 100 to 250 rpm and at a maximum barrel temperature set in the range from 200 to 230°C, whereby the barrel temperature profile is an isothermal profile,

thereby
yielding the mixed-plastic-polyethylene product blend having a melt flow rate of 0.1 to 0.45 g/10 min (ISO 1133, 2.16 kg load, 190°C).

Also provided is a mixed-plastic polyethylene product blend obtainable by a process from a mixed-plastic-polyethylene primary blend originating from 90 to 100 wt.-% from a waste stream,
whereby the mixed-plastic-polyethylene primary blend includes

a) 80 to 95 wt.-% of units derived from ethylene as determined by quantitative $^{13}C\{^1H\}$-NMR and further
b) 0 to 10 wt.-% units derived from alpha olefin(s)
c) 0 to 3.0 wt.-% stabilizers
d) 0 to 3.0 wt.-% talc
e) 0 to 3.0 wt.-% chalk
f) 0 to 6.0 wt.-% further components

all percentages with respect to the mixed-plastic-polyethylene primary blend,
whereby the total of components a), b), c), d), e) and f), add up to 100 wt.-%, ,
the process comprising:

a) providing a mixed-plastic-polyethylene primary blend originating from 90 to 100 wt.-% from a waste stream having a melt flow rate (ISO 1133, 2.16 kg load, 190°C) of 0.50 to 1.4 g/10min and having a content of units derived from ethylene of 80 to 95 wt.-% as determined by quantitative $^{13}C\{^1H\}$-NMR,

b) providing a virgin high-density polyethylene (HDPE) having a melt flow rate (ISO 1133, 5.0 kg load, 190°C) within a range of from 0.001 up to 0.50 g/10 min, preferably within a range of from 0.001 up to 0.30 g/10 min, having a density of from 945 to 958 kg/m³ and containing from 0.1 to 1.0 mol.-% of a $C_3$-$C_8$ α-olefin comonomer,

c) melt compounding the mixed-plastic-polyethylene primary blend with 4.0 to 18 wt.-% of the virgin high-density polyethylene (HDPE) in an extruder with a screw speed of from 100 to 400 rpm and at a barrel temperature set in the range from 150 to 250°C, whereby the barrel temperature profile is an isothermal profile, thereby

d) yielding the mixed-plastic-polyethylene product blend having a melt flow rate of 0.1 to 0.45 g/10 min (ISO 1133, 2.16 kg load, 190°C).

the mixed-plastic polyethylene product blend having

(i) a tensile modulus of from 750 to 1100 MPa (ISO 527-1,2) when measured on an injection molded test specimen; and

(ii) an impact strength of from 19.0 to 30 kJ/m² (ISO 179-1, 23°C), and/or

(iii) a melt flow rate (ISO 1133, 5.0 kg load, 190°C) of 0.5 to 2.5 g/10min, and/or

(iv) a melt flow rate (ISO 1133, 21.6 kg load, 190°C) of 10 to 65 g/10min.

## Experimental Section

The following Examples are included to demonstrate certain aspects and embodiments of the invention as described in the claims. It should be appreciated by those of skill in the art, however, that the following description is illustrative only and should not be taken in any way as a restriction of the invention.

## Test Methods

**a)Tensile modulus** was measured according to ISO 527-2 (cross head speed = 1 mm/min; test speed 50 mm/min at 23 °C) using injection moulded specimens as described in EN ISO 1873-2 (dog bone shape, 4 mm thickness). The measurement was done after 96 h conditioning time of the specimen.

**b) Impact strength** was determined as Charpy Notched Impact Strength according to ISO 179-1 eA at +23 °C on injection moulded specimens of 80 x 10 x 4 mm prepared according to EN ISO 1873-2. According to this standard samples are tested after 96 hours.

## c)units derived from C2

Quantitative nuclear-magnetic resonance (NMR) spectroscopy was used to quantify the ethylene content of the polymers.

Quantitative $^{13}C\{^1H\}$ NMR spectra were recorded in the solution-state using a Bruker Avance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium (III) acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225, Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950). The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed.

**d) Talc and chalk content:** measured by Thermogravimetric Analysis (TGA); experiments were performed with a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The weight loss between ca. 550°C and 700°C (WCO2) was assigned to CO2 evolving from CaCO3, and therefore the chalk content was evaluated as:

$$Chalk\ content = 100/44 \times WCO2$$

Afterwards the temperature was lowered to 300°C at a cooling rate of 20 °C/min. Then the gas was switched to oxygen, and the temperature was raised again to 900°C. The weight loss in this step was assigned to carbon black (Wcb). Knowing the content of carbon black and chalk, the ash content excluding chalk and carbon black was calculated as:

$$Ash\ content = (Ash\ residue) - 56/44 \times WCO2 - Wcb$$

Where Ash residue is the weight% measured at 900°C in the first step conducted under nitrogen. The ash content is estimated to be the same as the talc content for the investigated recyclates.

**e) Further components**

In addition to units derived from alpha olefin(s), talc, chalk and stabilizers the mixed-plastic-polyethylene primary blend may comprise further components as a result of the recycling process. Examples of such further components are other polymeric species, for example polystyrene, as well as paper and wood. These further components are not individually quantified, rather the total content of further components is calculated by subtracting the values of ethylene, alpha-olefin(s), stabilizer, talc and chalk contents from the overall weight.

**f) MFR:** melt flow rates were measured with a load of 2.16 kg ($MFR_2$), 5.0 kg ($MFR_5$) or 21.6 kg ($MFR_{21}$) at 190°C as indicated. The melt flow rate is that quantity of polymer in grams which the test apparatus standardized to ISO 1133 extrudes within 10 minutes at a temperature of or 190°C under a load of 2.16 kg, 5.0 kg or 21.6 kg.

**g) Limonene content**

This method allows figuring out the recycling nature of a raw material.

Limonene quantification was carried out using solid phase microextraction (HS-SPME-GC-MS) by standard addition.

50 mg ground samples were weighed into 20 mL headspace vials and after the addition of limonene in different concentrations and a glass-coated magnetic stir bar, the vial was closed with a magnetic cap lined with silicone/PTFE. Micro capillaries (10 pL) were used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6 mg/kg, 11 mg/kg and 16.5 mg/kg limonene were used in combination with some of the samples tested in this application. For quantification, ion-93 acquired in SIM mode was used. Enrichment of the volatile fraction was carried out by headspace solid phase microextraction with a 2 cm stable flex 50/30 pm DVB/Carboxen/PDMS fibre at 60°C for 20 minutes. Desorption was carried out directly in the heated injection port of a GCMS system at 270°C.

GCMS Parameters:

Column: 30 m HP 5 MS 0.25*0.25
Injector: Splitless with 0.75 mm SPME Liner, 270°C
Temperature program: -10°C (1 min)
Carrier gas: Helium 5.0, 31 cm/s linear velocity, constant flow
MS: Single quadrupole, direct interface, 280°C interface temperature
Acquisition: SIM scan mode
Scan parameter: 20-300 amu
SIM Parameter: m/Z 93, 100 ms dwell time
**h) Shear thinning indexes (SHI)**
were calculated according to Heino [1,2] (below).
**SHI** is calculated by dividing the Zero Shear Viscosity by a complex viscosity value, obtained at a certain constant shear stress value, G*. The abbreviation, SHI (0/50), is the ratio between the zero shear viscosity and the viscosity at the shear stress of 50 000 Pa.

1) Rheological characterization of polyethylene fractions. Heino, E.L.; Lehtinen, A; Tanner, J.; Seppälä, J. Neste Oy, Porvoo, Finland. Theor. Appl. Rheol., Proc. Int. Congr. Rheol., 11th (1992), 1 360-362
2) The influence of molecular structure on some rheological properties of polyethylene. Heino, Eeva-Leena. Borealis Polymers Oy, Porvoo, Finland. Annual Transactions of the Nordic Rheology Society, 1995

**i) details for Shear thinning index SHI2.7/210**

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression molded plates using nitrogen atmosphere and setting a strain within the linear viscoelastic regime. The oscillatory shear tests were done at 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, $\eta$*, the dynamic shear viscosity, $\eta$', the out-of-phase component of the complex shear viscosity, $\eta$" and the loss tangent, tan $\eta$, which can be expressed as follows:

$$G' = \frac{\sigma_0}{\gamma_0} \cos\delta \ [Pa] \qquad (3)$$

$$G'' = \frac{\sigma_0}{\gamma_0} \sin\delta \ [Pa] \qquad (4)$$

$$G^* = G' + iG'' \ [Pa] \qquad (5)$$

$$\eta^* = \eta' - i\eta'' \ [Pa \cdot s] \qquad (6)$$

$$\eta' = \frac{G''}{\omega} \ [Pa \cdot s] \qquad (7)$$

$$\eta'' = \frac{G'}{\omega} \ [Pa \cdot s] \qquad (8)$$

The determination of so-called Shear Thinning Index, which correlates with MWD and is independent of Mw, is done as described in equation 9.

$$SHI_{(x/y)} = \frac{Eta^* \; for \; (G^* = x \; kPa)}{Eta^* \; for \; (G^* = y \; kPa)} \qquad (9)$$

For example, the $SHI_{(2.7/210)}$ is defined by the value of the complex viscosity, in Pa s, determined for a value of G* equal to 2.7 kPa, divided by the value of the complex viscosity, in Pa s, determined for a value of G* equal to 210 kPa. The values of storage modulus (G'), loss modulus (G"), complex modulus (G*) and complex viscosity ($\eta^*$) were obtained as a function of frequency ($\omega$). Thereby, e.g. $\eta^*_{300rad/s}$ ($eta^*_{300rad/s}$) is used as abbreviation for the complex viscosity at the frequency of 300 rad/s and $\eta^*_{0.05rad/s}$ ($eta^*_{0.05rad/s}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{300}$ is used as abbreviation for the ratio of the loss modulus (G") and the storage modulus (G') at 300 rad/s.

The elasticity balance $tan_{0.05}/tan_{300}$ is defined as the ratio of the loss tangent $tan_{0.05}$ and the loss tangent $tan_{300}$.

Besides the above mentioned rheological functions one can also determine other rheological parameters such as the so-called elasticity index *EI(x)*. The elasticity index *EI(x)* is the value of the storage modulus (G') determined for a value of the loss modulus (G") of x kPa and can be described by equation 10.

$$EI(x) = G' \; for \; (G'' = x \; kPa) \; [Pa] \qquad (10)$$

For example, the *EI*(5kPa) is the defined by the value of the storage modulus (G'), determined for a value of G" equal to 5 kPa.

The viscosity $eta_{747}$ is measured at a very low, constant shear stress of 747 Pa and is inversely proportional to the gravity flow of the polyethylene composition, i.e. the higher $eta_{747}$ the lower the sagging of the polyethylene composition. The polydispersity index, *PI,* is defined by equation 11.

$$PI = \frac{10^5}{G'(\omega_{COP})} \; , \qquad \omega_{COP} = \omega \; for \; (G' = G'') \qquad (11)$$

where $\omega_{COP}$ is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "*Interpolate y-values to x-values from parameter*" and the "*logarithmic interpolation type*" were applied.

References:

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol., 11th (1992), 1, 360-362.

[2] "The influence of molecular structure on some rheological properties of polyethylene", Heino, E.L., Borealis Polymers Oy, Porvoo, Finland, Annual Transactions of the Nordic Rheology Society, 1995.

[3] "Definition of terms relating to the non-ultimate mechanical properties of polymers", Pure & Appl. Chem., Vol. 70, No. 3, pp. 701-754, 1998.

**j) Puncture energy**

Puncture energy is determined in the instrumented falling weight test according to ISO 6603-2 using injection moulded plaques of 60x60x1 mm and a test speed of 2.2 m/s, clamped, lubricated striker with 20 mm diameter. The reported puncture energy results from an integral of the failure energy curve measured at (60x60x1 mm).

# EP 3 800 221 A1

**Experiments**

Mixed-plastic-polyethylene blend:

Several samples/qualities of Purpolen PE (by MTM) differing as to melt flow rate and also rheology were selected.

Table 1: Mixed-plastic-polyethylene primary blends

|  | Purpolen PE-1 | Purpolen PE-2* |
|---|---|---|
| Ethylene content (wt%) | 94.3 | 87.3 |
| Density (kg/m$^3$) | 958 | 983 |
| Ash content (%) | 0.4 | 4.0 |
| MFR$_2$ (g/10min) | 0.99 | 0.80 |
| MFR$_5$ (g/10min) | 4.37 | 3.55 |
| SHI$_{2.7/210}$ | 31 | 40 |
| eta (0.05 rad/s) | 23921 | 27617 |
| eta (300 rad/s) | 603 | 562 |
| Tensile +23°C modulus (MPa) | 901 | 938 |
| TGA WCO2 (wt%) | 0.24 | 0.24 |
| TGA Wcb (wt%) | 0 | 0 |
| TGA Ash residue (wt%) | 0.93 | 2.73 |
| Limonene content of from 1 to 500 mg/kg | yes | yes |
| *Purpolen PE-2 contains 1.4 wt% TiO$_2$ | | |

It is easily recognizable there is quite some variation as to density, ash content, MFR$_2$, MFR$_5$, SHI$_{2.7/210}$, eta 0.05 rad/s, eta 300 rad/s, and also tensile modulus.

Virgin high-density polyethylene:

*a) Preparation of the solid Ziegler-Natta catalyst component*

The solid Ziegler-Natta catalyst component based on an MgCl$_2$*3EtOH carrier was analogously prepared according to WO 2017/207493 with the exception that the resultant catalyst particle size was as follows: $d_{10}$ = 2.7 $\mu$m, $d_{50}$ = 9.5 $\mu$m, $d_{90}$ = 24.3 $\mu$m. The catalyst particle size can be obtained e.g. by sieving the carrier or catalyst in a suitable manner.

*b) Offline pre-polymerization of the solid Ziegler-Natta catalyst component*

Diluted Ziegler-Natta catalyst oil slurry (37.37 kg containing 4.9 wt.-% of the solid Ziegler-Natta catalyst component as described above) was added to the reactor at 20°C followed by 33 wt.-% solution of TEAL in heptane (0.87 kg; Al/Ti = 1.0 mol/mol). Off-line pre-polymerization was initiated almost immediately after TEAL addition (stirring time ~5 min) by continuous addition of propylene at 20-25°C. A target pre-polymerization degree was set equal to 2 g polymer/g$_{cat}$ and the desired degree of pre-polymerization was reached after 5h 10min. The pressure was released and the reactor was flushed five times with nitrogen and then dried under vacuum for 1h. Dried off-line pre-polymerized Ziegler-Natta catalyst in oil was taken out into a catalyst drum. The yield was 42.97 kg containing 13.9 wt.-% of off-line pre-polymerized Ziegler-Natta catalyst with pre-polymerization degree of 2 polymer g/g$_{cat}$. The off-line pre-polymerized Ziegler-Natta catalyst had a particle size distribution in the range of $d_{10}$ = 5-18 $\mu$m, $d_{50}$ = 12-35 $\mu$m and $d_{90}$ = 26-50 $\mu$m.

*c) Multi-stage polymerization of the virgin high-density polyethylene, as exemplified by the polymerization of HDPE1*

A loop reactor having a volume of 50 dm$^3$ was operated at 50 °C and 57 bar pressure. For producing a first polymer fraction 53 kg/h of propylene, 4 kg/h of ethylene and 5 g/h of hydrogen were introduced into the reactor having a volume of 50 dm$^3$. In addition, the pre-polymerized solid Ziegler-Natta catalyst component prepared according to the description above was introduced into the reactor at a rate of 5.9 g/h, along with cocatalyst TEAL at a rate of 5.3 kg/h. The conditions in the reactor are shown in Table 2.

The polymer slurry was withdrawn from the loop reactor and transferred into a loop reactor having a volume of 150 dm$^3$. This second loop reactor was operated at 95°C and 54 bar pressure. Into the reactor were introduced ethylene and hydrogen so that the ratio of hydrogen to ethylene (H2/C2) in the reactor was 486 mol/kmol. No additional catalyst feed or comonomer feed was introduced into the reactor. The conditions in the reactor are shown in Table 2.

The polymer slurry was withdrawn from the second loop reactor and transferred into a further loop reactor having a volume of 350 dm$^3$. This third loop reactor was operated at 95°C and 53 bar pressure. Into the reactor were introduced ethylene and hydrogen so that the ratio of hydrogen to ethylene (H2/C2) in the reactor was 414 mol/kmol. No additional catalyst feed was introduced into the reactor. The conditions in the reactor are shown in Table 2. The polymer slurry was withdrawn from the third loop reactor and transferred into a flash vessel operated at 3 bar pressure and 40-60 °C temperature where the hydrocarbons were substantially removed from the polymer. The polymer was then introduced into a gas phase reactor operated at a temperature of 85°C and a pressure of 20 bar. In addition, ethylene and 1-hexene were introduced into the reactor so that the ratio of hydrogen to ethylene (H2/C2) in the reactor was 1.0 mol/kmol and the ratio of 1-hexene to ethylene (C6/C2) in the reactor was 29.9 mol/kmol. Additionally dimethoxydimethylsilane (DMDS) was introduced into the gas phase reactor as external donor at a feed rate of 2.5 g/h. The conditions are shown in Table 2.

The resulting polymer was purged with nitrogen (about 50 kg/h) for one hour, stabilised with 2200 ppm of Irganox B225 and 1500 ppm Ca-stearate and then pelletized in a co-rotating twin screw extruder ZSK 40 (manufactured by Coperion) so that the throughput was 20-25 kg/h and the screw speed was 120 rpm.

Table 2: Polymerization conditions

|  | HDPE1 | HDPE2 |
|---|---|---|
| **First loop reactor:** |  |  |
| Temperature [°C] | 50 | 50 |
| Pressure [bar] | 57 | 58 |
| Catalyst feed [g/h] | 5.9 | 5.9 |
| Cocatalyst feed [g/h] | 5.3 | 5.3 |
| $C_2$ feed [kg/h] | 4 | 4 |
| $C_3$ feed [kg/h] | 53 | 46 |
| $H_2$ feed [g/h] | 5 | 5 |
| Split [wt%] | 2.6 | 2.6 |
| **Second loop reactor** |  |  |
| Temperature [°C] | 95 | 95 |
| Pressure [bar] | 54 | 55 |
| $H_2/C_2$ [mol/kmol] | 486 | 278 |
| $C_2$ concentration [mol%] | 1.2 | 1.2 |
| Split [wt%] | 18.7 | 17.2 |
| $MFR_2$ [g/10 min] | 37 | 31 |
| **Third loop reactor** |  |  |
| Temperature [°C] | 95 | 95 |
| Pressure [bar] | 53 | 54 |
| $H_2/C_2$ [mol/kmol] | 414 | 189 |
| $C_2$ concentration [mol%] | 3.0 | 2.0 |
| Split [wt%] | 38.8 | 40.5 |

(continued)

| Third loop reactor | | |
|---|---|---|
| MFR$_2$ [g/10 min] | 106 | 28 |
| **Gas phase reactor:** | | |
| Temperature [°C] | 85 | 85 |
| Pressure [bar] | 20 | 20 |
| H$_2$/C$_2$ [mol/kmol] | 1.0 | 0.5 |
| C$_6$/C$_2$ [mol/kmol] | 29.9 | 19.5 |
| C$_2$ concentration [mol%] | 18.6 | 20.7 |
| external donor feed [g/h] | 2.5 | 2.5 |
| Split [wt%] | 39.9 | 39.8 |

HDPE3: Commercial grade HE3493-LS-H available from Borealis AG is a bimodal HDPE with properties as given in Table 3.

The properties of the virgin high-density polyethylenes are given in Table 3.

Table 3: Virgin high-density polyethylene properties

| | HDPE1 | HDPE2 | HDPE3 |
|---|---|---|---|
| Pellet Density [kg/m$^3$] | 954 | | 949 |
| MFR$_{21}$ [g/10 min] | 1.68 | 0.7 | 6.50 |
| MFR$_5$ [g/10 min] | 0.08 | <0.05 | 0.24 |
| Wc [rad/s] | 0.02 | | |
| PI [Pa$^{-1}$] | 5.18 | | |
| eta (0.05 rad/s) [Pa.s] | 923876 | 1335686 | |
| eta (300 rad/s) [Pa.s] | 1515 | 1881 | |
| Mn [g/mol] | 11800 | 16600 | |
| Mw [g/mol] | 391000 | 450000 | |
| Mz [g/mol] | 1950000 | 2080000 | |
| Mz+1 [g/mol] | 3160000 | 3290000 | |
| Mv [g/mol] | 270000 | 316000 | |
| PD | 33.0 | 27.1 | |
| C6 content [mol%] | 0.29 | 0.18 | 0.5 |
| Tensile Modulus (+23°C) MPa | 1336 | | 950 |
| NIS (kJ/m$^2$) | | | 48.1 |

Results:

Comparative examples:

CE1 and CE2 are formed by compounding Purpolen PE-1 and Purpolen PE-2 respectively. Compounding was conducted in a ZSK32 extruder, with a screw speed of 120 rpm and an isothermal temperature profile of 230 °C.

Inventive examples:

The inventive examples were obtained by melt blending Purpolen PE with a specified amount of a virgin HDPE in a ZSK32 extruder, with a screw speed of 120 rpm and an isothermal temperature profile of 230 °C, with the following compositions:

| | |
|---|---|
| IE1: | Purpolen PE-1 modified with 10 wt.-% HDPE1 |
| IE2: | Purpolen PE-2 modified with 8 wt.-% HDPE1 |
| IE3: | Purpolen PE-1 modified with 10 wt.-% HDPE2 |
| IE4: | Purpolen PE-1 modified with 17 wt.-% HDPE3 |

The characterization of the comparative and inventive mixed-plastic-polyethylene blends is given in Table 4.

Table 4: Mixed-plastic-polyethylene product blends

| | CE1 | CE2 | IE1 | IE2 | IE3 | IE4 |
|---|---|---|---|---|---|---|
| Purpolen sample | PE1 | PE2 | PE1 | PE2 | PE1 | PE1 |
| Virgin HDPE | - | - | HDPE1 | HDPE1 | HDPE2 | HDPE3 |
| Amount virgin HDPE (wt.-%) | 0 | 0 | 10 | 8 | 10 | 17 |
| Density (kg/m$^3$) | 958 | 998 | 957 | 966 | 957 | 956 |
| MFR$_2$ (g/10min) | 0.76 | 0.63 | 0.37 | 0.38 | 0.38 | 0.37 |
| MFR$_5$ (g/10min) | 3.44 | 3.04 | 1.82 | 2.17 | 1.98 | 1.91 |
| MFR$_{21}$ (g/10min) | 65.5 | 68.7 | 47.6 | 58.3 | 44.7 | 44.2 |
| Tensile Modulus (+23°C) MPa | 871 | 921 | 900 | 964 | 892 | 875 |
| Delta Tensile Modulus (+23°C) MPa vs. Purpolen sample | | | +29 | +43 | +21 | +4 |
| NIS (+23°C) kJ/m$^2$ | 15.0 | 12.8 | 20.0 | 21.4 | 21.0 | 23.4 |
| Delta NIS (+23°C) kJ/m$^2$ vs. Purpolen sample | | | +5.0 | +8.6 | +6.0 | +8.4 |
| Puncture energy (+23°C) 4_4m/s (J) | 9.69 | 7.25 | 9.03 | 5.51 | 10.38 | 12.0 |
| Puncture energy (0°C) 4_4m/s (J) | 9.77 | 7.33 | 10.97 | 8.70 | 10.37 | 11.45 |

It has been found that mixed-plastic-polyethylene primary blends having poor impact strength can be optimized such that an acceptable level of at least 19 kJ/m$^2$ at 23°C is obtained by the addition of low amounts of virgin high-density polyethylene (HDPE).

In all cases the tensile modulus could also be maintained at a reasonable level. Given the improvement in impact strength this is a notable result.

**Claims**

1. A process for providing a mixed-plastic-polyethylene product blend having a melt flow rate of 0.1 to 0.45 g/10 min (ISO 1133, 2.16 kg load, 190°C), more preferably of from 0.2 to 0.45 g/10 min, from a mixed-plastic-polyethylene primary blend originating from 90 to 100 wt.-% from a waste stream, the process comprising:

   a) providing a mixed-plastic-polyethylene primary blend originating from 90 to 100 wt.-% from a waste stream having a melt flow rate (ISO 1133, 2.16 kg load, 190°C) of 0.50 to 1.4 g/10min and having a content of units derived from ethylene of 80 to 95 wt.-% as determined by quantitative $^{13}$C{$^1$H}-NMR,
   b) providing a virgin high-density polyethylene (HDPE) having a melt flow rate (ISO 1133, 5.0 kg load, 190°C) within a range of from 0.001 up to 0.50 g/10 min, preferably within a range of from 0.001 up to 0.30 g/10 min, and having a density of from 945 to 958 kg/m$^3$

c) melt compounding the mixed-plastic-polyethylene primary blend with 2.0 to 20 wt.-% of the virgin high-density polyethylene (HDPE) in an extruder with a screw speed of from 100 to 400 rpm and at a barrel temperature set in the range from 150°C to 250°C, thereby

yielding the mixed-plastic-polyethylene product blend

2. Process according to claim 1, whereby the ratio of melt flow rate of mixed-plastic-polyethylene primary blend (ISO 1133, 2.16 kg load, 190°C) versus melt flow rate of mixed-plastic-polyethylene product blend (ISO 1133, 2.16 kg load, 190°C) is in the range of 1.1 to 3.0, more preferably in the range of 1.2 to 2.7.

3. Process according to claim 1, whereby the ratio of melt flow rate of the mixed-plastic-polyethylene primary blend (ISO 1133, 5.0 kg load, 190°C) versus melt flow rate of mixed-plastic-polyethylene product blend (ISO 1133, 5.0 kg load, 190°C) is in the range of 1.1 to 3.0, more preferably in the range of 1.3 to 2.5, and/or the ratio of melt flow rate of mixed-plastic-polyethylene primary blend (ISO 1133, 21.6 kg load, 190°C) versus melt flow rate of mixed-plastic-polyethylene product blend (ISO 1133, 21.6 kg load, 190°C) is in the range of 1.05 to 2.0, more preferably in the range of 1.05 to 1.6.

4. Process according to any of the preceding claims, whereby the density of the mixed-plastic-polyethylene primary blend is in the range of 950 to 985 $kg/m^3$, more preferably in the range of 955 to 985 $kg/m^3$.

5. Process according to any of the preceding claims, whereby the melt flow rate of the mixed-plastic-polyethylene primary blend (ISO 1133, 5.0 kg load, 190°C) is in the range of 2.0 to 5.0 g/10min, more preferably in the range of 2.2 to 4.5 g/10 min.

6. Process according to any of the preceding claims, whereby the mixed-plastic-polyethylene primary blend has a shear thinning index $SHI_{2.7/210}$ of 25 to 45 measured by dynamic shear measurement according to ISO 6721-1 and ISO 6721-10.

7. Process according to any of the preceding claims, whereby the mixed-plastic-polyethylene primary blend includes

a) 80 to 95 wt.-% of units derived from ethylene as determined by quantitative $^{13}C\{^1H\}$-NMR and further
b) 0 to 10 wt.-% units derived from alpha olefin(s)
c) 0 to 3.0 wt.-% stabilizers
d) 0 to 3.0 wt.-% talc
e) 0 to 3.0 wt.-% chalk
f) 0 to 6.0 wt.-% further components
all percentages with respect to the mixed-plastic-polyethylene primary blend, whereby the total of components a), b), c), d), e) and f), add up to 100 wt.-%.

8. Process according to any of the preceding claims, whereby the virgin high-density polyethylene (HDPE) comprises a $C_3$-$C_8$ $\alpha$-olefin comonomer in an amount of 0.1 to 1.0 mol.-%.

9. Process according to any of the preceding claims, whereby the virgin high-density polyethylene (HDPE) has the following property:

a) a melt flow rate (ISO 1133, 21.6 kg load, 190°C) in the range of 0.5 to 7.0 g/10 min,

10. Process according to any of the preceding claims, whereby the barrel temperature profile is an isothermal profile.

11. Process according to any of the preceding claims, whereby the ratio of Charpy Notched Impact Strength of the mixed-plastic-polyethylene product blend measured according to ISO 179-1 eA at + 23 °C on injection moulded specimens of 80 x 10 x 4 mm prepared according to EN ISO 1873-2 versus the Charpy Notched Impact Strength of the mixed-plastic-polyethylene primary blend measured according to ISO 179-1 eA at + 23 °C on injection moulded specimens of 80 x 10 x 4 mm prepared according to EN ISO 1873-2 is from 1.05 to 1.80.

12. Process according to any of the preceding claims, whereby the ratio of tensile modulus of the mixed-plastic-polyethylene product blend measured according to ISO 527-2 at + 23 °C on injection moulded specimens of 80 x 10 x 4 mm prepared according to EN ISO 1873-2 versus the tensile modulus of the mixed-plastic-polyethylene primary blend measured according ISO 527-2 at + 23 °C on injection moulded specimens of 80 x 10 x 4 mm prepared according to EN ISO 1873-2 is from 0.95 to 1.20.

13. A mixed-plastic polyethylene product blend obtainable by the process of claims 1 to 12 having

> (i) a tensile modulus of from 750 to 1100 MPa (ISO 527-1,2) when measured on an injection molded test specimen; and
> (ii) an impact strength of from 19.0 to 30 kJ/m$^2$ (ISO 179-1, 23°C), and/or
> (iii) a melt flow rate (ISO 1133, 5.0 kg load, 190°C) of from 0.5 to 2.5 g/10min, and/or
> (iv) a melt flow rate (ISO 1133, 21.6 kg load, 190°C) of from 10 to 65 g/10min.

14. Use of

> - a virgin high-density polyethylene (HDPE) having a melt flow rate (ISO 1133, 5.0 kg load, 190°C) within a range of from 0.001 up to 0.50 g/10 min, preferably within a range of from 0.001 up to 0.30 g/10 min, and a density of from 945 to 958 kg/m$^3$;

for providing impact strength (ISO 179-1, 23°C) of at least 19 kJ/m$^2$ of a mixed-plastic-polyethylene primary blend originating from 90 to 100 wt.-% from a waste stream and having

> - a melt flow rate (ISO 1133, 2.16 kg load, 190°C) of 0.50 to 1.4 g/10min; and
> - a content of units derived from ethylene of 80 to 95 wt.-% as determined by quantitative $^{13}C\{^1H\}$-NMR.

by
melt compounding in the presence of said virgin high-density polyethylene in an extruder with a screw speed of from 100 to 400 rpm and at a barrel temperature set in the range from 150°C to 250 °C.

15. Use according to claim 14, wherein the virgin high-density polyethylene comprises a $C_3$-$C_8$ $\alpha$-olefin comonomer in an amount of 0.1 to 1.0 mol%.

Europäisches
Patentamt

European
Patent Office

Office européen
des brevets

# EUROPEAN SEARCH REPORT

**Application Number**

EP 19 20 1458

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 746 334 A1 (BOREALIS AG [AT]) 25 June 2014 (2014-06-25) * examples 1,2 * ----- | 1-13 | INV. C08L23/04 |
| A | WO 2018/118362 A1 (DOW GLOBAL TECHNOLOGIES LLC [US]) 28 June 2018 (2018-06-28) * examples B,C,D,1-5 * ----- | 1-13 | |

**TECHNICAL FIELDS SEARCHED (IPC)**

C08L

~~The present search report has been drawn up for all claims~~

| Place of search | Date of completion of the search | Examiner |
|---|---|---|
| Munich | 14 April 2020 | Rouault, Yannick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................................
& : member of the same patent family, corresponding document

EPO FORM 1503 03.82 (P04C01)

Europäisches
Patentamt

European
Patent Office

Office européen
des brevets

Application Number

EP 19 20 1458

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-13(completely); 14, 15(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 1-13(completely); 14, 15(partially)

   A process as in claim 1 and the use of a specific HDPE as in claim 1 to obtain a mixed-plastic-polyethylene product blend as in claim 1.
   
   ---

2. claims: 14, 15(partially)

   The use of an HDPE as in claim 14 to obtain a mixed-plastic-polyethylene product blend impact strength (ISO 179-1, 23°C) of at least 19 kJ/m2, said mixed-plastic-polyethylene product blend having a melt flow rate outside the range of 0.1 to 0.45 g/10 min (ISO 1133, 2.16 kg load, 190°C).
   
   ---

## ANNEX TO THE EUROPEAN SEARCH REPORT
## ON EUROPEAN PATENT APPLICATION NO.

EP 19 20 1458

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2020

| Patent document cited in search report | | Publication date | Patent family member(s) | | Publication date |
|---|---|---|---|---|---|
| EP 2746334 | A1 | 25-06-2014 | AU | 2013360679 A1 | 02-07-2015 |
| | | | AU | 2016200958 A1 | 03-03-2016 |
| | | | CN | 104870550 A | 26-08-2015 |
| | | | EP | 2746334 A1 | 25-06-2014 |
| | | | ES | 2538590 T3 | 22-06-2015 |
| | | | WO | 2014096104 A1 | 26-06-2014 |
| WO 2018118362 | A1 | 28-06-2018 | BR | 112019010616 A2 | 17-09-2019 |
| | | | CN | 110036059 A | 19-07-2019 |
| | | | EP | 3559092 A1 | 30-10-2019 |
| | | | KR | 20190091341 A | 05-08-2019 |
| | | | US | 2020087492 A1 | 19-03-2020 |
| | | | WO | 2018118362 A1 | 28-06-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1036771 A1
- WO 201700138441 A1
- WO 2017202802 A1
- WO 2013025822 A1
- EP 2568000 A1
- EP 2770016 A1
- WO 2017207493 A

**Non-patent literature cited in the description**

- **SINGH, G. ; KOTHARI, A. ; GUPTA, V.** *Polymer Testing,* 2009, vol. 28 (5), 475
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **CHENG, H. N.** *Macromolecules,* 1984, vol. 17, 1950
- **WANG, W-J. ; ZHU, S.** *Macromolecules,* 2000, vol. 33, 1157
- **HEINO, E.L. ; LEHTINEN, A ; TANNER, J. ; SEPPÄLÄ, J.** Rheological characterization of polyethylene fractions. *Theor. Appl. Rheol., Proc. Int. Congr. Rheol.,* vol. 1, 360-362
- **HEINO, EEVA-LEENA.** The influence of molecular structure on some rheological properties of polyethylene. *Annual Transactions of the Nordic Rheology Society,* 1995
- **HEINO, E.L. ; LEHTINEN, A. ; TANNER J. ; SEPPÄLÄ, J.** Rheological characterization of polyethylene fractions. *Theor. Appl. Rheol., Proc. Int. Congr. Rheol,* 1992, vol. 1, 360-362
- **HEINO, E.L.** The influence of molecular structure on some rheological properties of polyethylene. *Annual Transactions of the Nordic Rheology Society,* 1995
- Definition of terms relating to the non-ultimate mechanical properties of polymers. *Pure & Appl. Chem.,* 1998, vol. 70 (3), 701-754